**Europäisches Patentamt**

(19) **European Patent Office**

**Office européen des brevets**

(11) Veröffentlichungsnummer: **0 122 945**

**A1**

(12) **EUROPÄISCHE PATENTANMELDUNG**

(21) Anmeldenummer: **83103563.9**

(22) Anmeldetag: **13.04.83**

(51) Int. Cl.³: **G 01 N 27/22**
**G 01 N 27/04**

(43) Veröffentlichungstag der Anmeldung:
**31.10.84 Patentblatt 84/44**

(84) Benannte Vertragsstaaten:
**AT CH DE FR GB IT LI NL**

(71) Anmelder: **LICENCIA Találmányokat Ertékesitö Vállalat**
**Bajcsy Zs. u. 16**
**H-1051 Budapest(HU)**

(72) Erfinder: **Karsai, Henrik, Dipl.-Ing.**
**Révay köz 15/d**
**H-1065 Budapest(HU)**

(72) Erfinder: **Ambrus geb. Arato, Valéria, Dr.**
**Varga J.u. 174**
**H-1162 Budapest(HU)**

(74) Vertreter: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) **Elektronischer Messer und/oder Ferngeber für relative Feuchte.**

(57) Gegenstand der Erfindung ist ein elektronischer Messer und/oder Ferngeber für relative Feuchte mit einem kapazitiven oder ohmischen Fühler, der einen kapazitiv oder ohmisch abstimmbaren Oszillator (1), einen Referenzoszillator (2), einen Signalumformer (4), einen Zähler (6) und gegebenenfalls eine Anzeige (9) besitzt. Das Wesen der Erfindung liegt darin, daß das frequenzbestimmende Element des Feuchtefühleroszillators (1) ein Feuchtefühler ist, daß der Ausgang des Feuchtefühleroszillators (1) vorzugsweise über den Signalumformer (4) an einen Eingang des Zählers (6) angeschlossen ist, daß der Referenzoszillator (2) vorzugsweise über den Signalumformer (4) an einen Meßsignaloszillator (5) angeschlossen ist, der seinerseits an den anderen Eingang des Zählers (6) angeschlossen ist, und daß sein Ausgang an einen mit einem Temperaturfühler versehenen Meßsignalfrequenzregler (7) angeschlossen ist, der über seinen Reglerausgang auf den Meßsignaloszillator (5) geschaltet ist. Die Erfindung kann derart ausgebildet sein, daß der Meßsignalfrequenzregler (7) über einen temperaturabhängigen Spannungsregler und über einen in Abhängigkeit des Meßwertes wirkenden Spannungsregler verfügt. Nach einer weiteren Ausführungsform der Erfindung ist zum Oszillator ein statt des relativen Feuchtemessers von außen umschaltbarer Temperaturfühler anschließbar angeordnet.

Fig 1

## Elektronischer Messer und/oder Ferngeber für relative Feuchte

Die Erfindung betrifft ein elektronisches Gerät mit geringem Stromverbrauch, das zur Messung und/oder Fernsendung der relativen Feuchte geeignet ist, das vorzugsweise mit einem kapazitiven Fühler versehen ist, und bei welchem die Temperaturabhängigkeit des Fühlers und weiters die Nichtlinearität der Empfindlichkeit elektronisch kompensiert wird.

Mit Meßgeräten zum Fühlen der relativen Feuchte werden verschiedene Fühlertypen verwendet, die ein dem Meßwert entsprechendes elektrisches Ausgangssignal erzeugen: es gibt ein trocken-nasses Widerstandsthermometer, einen Lithium-Chlorid-Fühler; es sind Fühlertypen bekannt, die auf Einwirkung der Feuchte ihre mechanischen Eigenschaften (z.B. Dehnung) ändern, und solche, die auf Einwirkung der Nässe ihre elektrischen Eigenschaften (Kapazität, Leitfähigkeit) ändern.

Ein gemeinsames Kennzeichen sämtlicher Fühler liegt darin, daß die Bestimmung des Wertes der Feuchte durch Änderung eines physikalischen Parameters, durch die Einwirkung der Nässe durchgeführt wird. Das Maß dieser Änderung hängt aber neben der Nässe auch von der Temperatur ab und auch von dem Sättigungsgrad des zu messenden Mediums (Gas). Um die Temperaturabhängigkeit und die nichtlineare Empfindlichkeitsänderung der Meßinstrumente kompensieren zu können, muß man zwangsläufig kostspielige Schaltungsanordnungen verwenden. Solche Lösungen sind unter anderen in der DE-C-2 219 075, in der US-A-3 886 797 und in der US-A-3 890 828 beschrieben. Durch diese Lösungen wird einerseits die Kompliziertheit der Meßinstrumente erhöht, andererseits muß man bei dem Auswechseln des Fühlers langdauernde Eichungsmaßnahmen vornehmen.

Ziel der Erfindung ist die Schaffung eines Feuchtemesser-Gerätes von geringen Abmessungen und geringem Verbrauch, das eine unmittelbare digitale Anzeige und/oder ein zur Fernmeldung bzw. zur automatischen Datenverarbeitung unmittelbar geeignetes Ausgangssignal liefert. Eine weitere Zielsetzung der Erfindung liegt darin, daß im Notfalle des Austausches des Fühlers auf einen anderen Fühler desselben Typs die Eichung an Ort und Stelle durch einfache Mittel schnell durchgeführt werden kann.

Das Ziel der Erfindung wird erreicht mit einem elektronischen Messer und/oder Ferngeber für relative Feuchte mit einem kapazitiven oder ohmischen Fühler, der einen kapazitiv oder ohmisch abstimmbaren Oszillator, einen Referenzoszillator, einen Signalumformer, einen Zähler und gegebenenfalls eine Anzeige besitzt, der erfindungsgemäß derart aufgebaut ist, daß das frequenzbestimmte Element des Feuchtefühleroszillators ein Feuchtefühler für relative Feuchte ist, daß der Ausgang des Feuchtefühleroszillators vorzugsweise über den Signalumformer an den Eingang des Zählers angeschlossen ist; daß der Referenzoszillator vorzugsweise über den Signalumformer an einen Meßsignaloszillator angeschlossen ist, der seinerseits an den anderen Eingang des Zählers angeschlossen ist, und daß der Ausgang des Zählers an einen mit einem Temperaturfühler versehenen Meßsignalfrequenzregler angeschlossen ist, der über seinen Reglerausgang auf den Meßsignaloszillator geschaltet ist.

Die Ansprüche 2 und 3 geben Weiterbildungen der Erfindung wieder.

Die Zielsetzung wurde folgenderweise realisiert: Als Fühler wird eine handelsübliche, auf beiden Seiten mit poröser Goldfolie versehene Acetatfolie (Kondensator) verwendet. Diese entspricht z.B. der Type VALVO Typ 2322 691 90001.Dieses Mittel ist ein frequenzbestimmendes Element eines sogenannten "Feuchte"-Oszillators (prinzipiell könnte man das ohmische Element des RC-Oszillators für diesen Zweck verwenden). Da sich die Kapazität unter dem Einfluß der relativen Feuchte ändert, ändert sich auch die Frequenz des "Feuchte"-Oszillators. Die Auswertung der relativen Feuchte wird mit Hilfe eines Referenz-Oszillators vorgenommen, und zwar derart, daß an beide Oszillatoren je ein gleicherweise gestalteter signalumsetzender Stromkreis angeschlossen ist. An den Ausgängen dieser Stromkreise erscheint nach Ablauf vorgegebener Zahlen von Perioden eine Pegeländerung (z.B. von einem niedrigeren ein hoher Pegel). Die konstante Frequenz des Frequenzoszillators wird derart eingestellt, daß die Frequenz bei 0% relative Feuchte mit der Referenzfrequenz des "Feuchte"-Oszillators gleich ist. Bei höheren Feuchtewerten schwingt also immer der Referenzoszillator auf einer früheren Frequenz, und vom Ausgang des an diesen angeschlossenen signalumsetzenden Stromkreises kann immer ein Meßwertoszillator in Betrieb gesetzt sein, dessen Signal auf einen Zähler gegeben wird. Die Pegeländerung im Feuchte-Oszillatorzweig, deren Zeitpunkt immer von dem Wert der der relativen Feuchte proportionalen Frequenz abhängt, stellt den Lauf des Zählers ab (und schaltet die Spannung an den nicht speichernden Stromkreisen ab). So erscheint am Ausgang des Zählers ein Impulskode, der dem Wert der relativen Feuchte propportional ist.

Um es zu erreichen, daß dieser Kode die relative Feuchte unmittelbar (ohne Anwendung einer Korrekturtabelle) gleich in Prozentzahlen ausdrückt, wird die Spannungsabhängigkeit der Frequenz des Meßsignaloszillators ausgenützt. Bei höheren Temperaturen werden durch den Fühler zu demselben relativen Feuchtewert höhere Kapazitätswerte bestimmt als bei niedrigeren Temperaturen, so daß der "Feuchte"-Oszillator bei kleineren Frequenzen schwingt und dadurch die Zählung später stillsetzt. Um zu erreichen, daß der am Ausgang des Zählers erscheinende Impulskode die relative Feuchte ohne die verzerrende Wirkung der Temperatur charakterisiert, kann dies derart durchgeführt werden, daß das Meßsignal des Oszillators auch durch eine von der Temperatur abhängige Spannung abgestimmt ist. So läßt sich erreichen, daß dieser Oszillator bei höheren Temperaturen mit kleinerer Frequenz so schwingen wird, daß über das Tor, das wegen der Höhe der Temperatur eine längere Zeit lang offen ist, Impulse ungeänderter Zahl zu dem Zähler gelangt.

Der Fühler hat die Eigenschaft, daß seine Kapazität mit der Erhöhung der relativen Feuchte nicht linear zunimmt, sondern zu der Einheit der relativen Feuchtezunahme eine höhere Kapazitätzunahme gehört.

Die Zielsetzung ist, daß die Frequenzänderung des Meßsignaloszillators auf den Einfluß einer Einheit der relativen Feuchteänderung in dem ganzen Meßbereich denselben Wert besitzt. Diese Zielsetzung kann vorzüglich derart realisiert sein, daß durch die Zunahme der Kapazitätsänderung die Frequenz des Meßsignaloszillators verringert wird. In der praktischen Ausführung ist es ausreichend, die kontinuierliche Kompensation durch eine schrittweise Annäherung zu realisieren, um zu erreichen, daß der vom Ausgang des Zählers gesteuerte elektronische Schalter bei zunehmenden Kapazitätswerten den Meßsignaloszillator mit abnehmender Speisespannung versorgt. Durch diese Maßnahmen kann erreicht werden,
daß z.B. zu jedem einzigen relativen Feuchteprozent im ganzen Meßbereich immer ein einziger Impuls gehört.

Bei der ersten Inbetriebnahme wie auch im Falle des Austausches des Fühlers wird die Eichung des Meßinstrumentes
derart durchgeführt, daß im Verlauf der relativen Feuchte
deren Wert in der Nähe von Null liegt, der "Feuchte"-Oszillator mit dem Referenzoszillator auf die gleiche Frequenz
geeicht sein muß.

Praktische Realisation ist, die Justierung eines Potentiometers, bis das Meßinstrument den bekannten relativen Feuchtewert zeigt. Mittels eines anderen Potentiometers kann man
die Frequenz des Meßsignaloszillators im Laufe der Fühlung
der gesättigten relativen Feuchte solange abstimmen, bis
der signalisierte Wert beinahe 100 % ist. Danach muß man
die oben erwähnten Einstellungen wiederholt durchführen.
Zur Eichung sind zwei bekannte relative Meßwerte liefernde
Hilfsmittel (z.B. gesättigtes Salzkonzentrat) nötig.

Die minimale elektrische Leistungaufnahme des Meßgerätes
wird durch Anwendung von Elementen geringer Leistungsaufnahme in schrittweiser Betriebsart sichergestellt.

Die Erfindung ist im folgenden an einem Ausführungsbeispiel
anhand der Zeichnungen näher erläutert. In der Zeichnung
zeigen

Fig. 1        den Aufbau eines Feuchtemessers im Blockdia-
              gramm und

0122945

- 6 -

Fig. 2          den Aufbau derjenigen Blöcke auf welche die
                beispielsweise Ausführungsform der Erfindung
                besonders abgestellt ist.

Ein Feuchtefühleroszillator 1, ein Referenzoszillator 2
und ein Temperaturfühleroszillator 3 sind mit ihren Ausgängen auf einen Signalumformer und Umschalter 4 geschaltet,
dessen Ausgang auf einen Meßsignaloszillator 5, einen Eingang eines Zählers 6 und eine Speisespannungsquelle 8 geschaltet ist. Der Ausgang des Zählers 6 ist auf ein Meßsignalfrequenzstellglied oder einen Meßsignalfrequenregler
7, auf eine Anzeige 9 und auf einen Ferngeber 10 geschaltet.
Der Ausgang des Meßsignalfrequenzstellgliedes ist auf einen
zweiten Eingang des Meßsignaloszillators 5, ein zweiter
Ausgang des Temperaturfühleroszillators 3 auf einen dritten
Eingang des Meßsignaloszillators 5 geschaltet. Ein schrittweise wirkender Ausgang der Speisespannungsquelle 8 ist zum
Feuchtefühleroszillator 1, zum Referenzoszillator 2 und zum Temperaturfühleroszillator 3 geführt, wobei alle übrigen Einheiten, die die
Speisung von der Speisespannungsquelle benötigen, an einen in der Zeichnung nicht näher bezeichneten Ausgang der Speisespannungsquelle 8 angeschlossen sind.

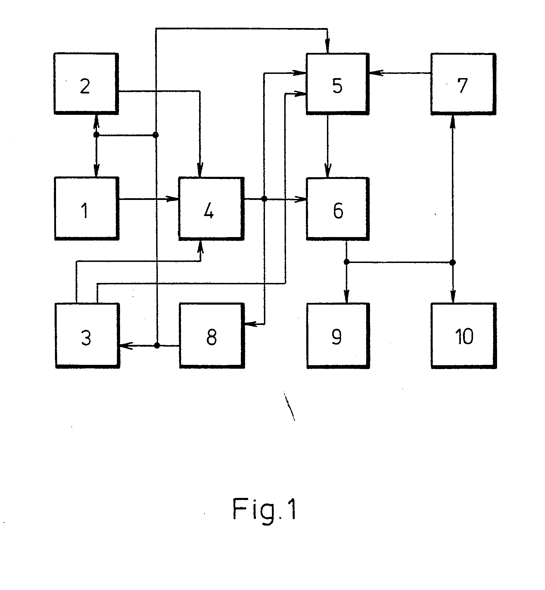

Die Wirkungsweise der Schaltung gemäß Fig. 1 ist die folgende: Der Feuchtefühleroszillator 1 arbeitet auf die Einwirkung der schrittweise eintastenden Speisespannung in
Abhängigkeit der relativen Feuchte der Umgebung des Fühlers
auf einen Eingang der signalumformenden und umschaltenden
Einheit. Gleichzeitig liefert der Referenzoszillator 2 eine
Signalreihe mit konstanter Frequenz auf den zweiten Eingang
des Signalumformers und Umschalters 4. Beide Signalreihen
gelangen auf je einen Frequenzteiler, an deren Ausgängen
nach Ablauf einer gleich langen Impulszahl eine logische
Pegeländerung zustandekommt. Die erste Pegeländerung schaltet ein, die zweite schaltet den Meßsignaloszillator 5 und den freigebenden Eingang des Zählers 6, und den schrittweise Spannung liefernden Ausgang der Speisespannungsquelle 8 ein. Bei der Eichung wird die Frequenz des Feuchtefühleroszillators 1 derart eingestellt, daß bei einer relativen Feuchte von 0% die Frequenz mit der Frequenz des Referenzoszillators 2 übereinstimmt. In diesem Falle kommen die Pegeländerungen der zwei Frequenzteiler des Signalumformers und Umschalters 4 gleichzeitig zustande und der Meßsignaloszillator 5 liefert keine Impulse, der Zähler 6 bleibt auf dem Null-Wert.

Falls in der Umgebung des Feuchtefühleroszillators 1 die relative Feuchte zunimmt, vermindert sich seine Frequenz, so daß im an den letzteren angeschlossenen Frequenzverteilerzweig die Pegeländerung später zustandekommt. Der Meßsignaloszillator 5 kann auf diese Weise den Zähler 6 in Abhängigkeit vom Wert der relativen Feuchte fortschreiten lassen.

Der lineare Zusammenhang zwischen %-Wert der relativen Feuchte und des signalisierten numerischen Wertes ist vom Meßsignalfrequenzregler 7 derart gesichert, daß die Frequenz des Meßsignaloszillators 5 an mit zunehmender Sättigung vorbestimmten Punkten des Zählers 6 auf kleinere Werte gestellt wird. Im Ausführungsbeispiel sind im Meßsignalfrequenzregler die die Linearisierung annähernden Eingriffspunkte bei den Werten 40, 60, 80 und 90 % der relativen Feuchte eingestellt bzw. gewählt.

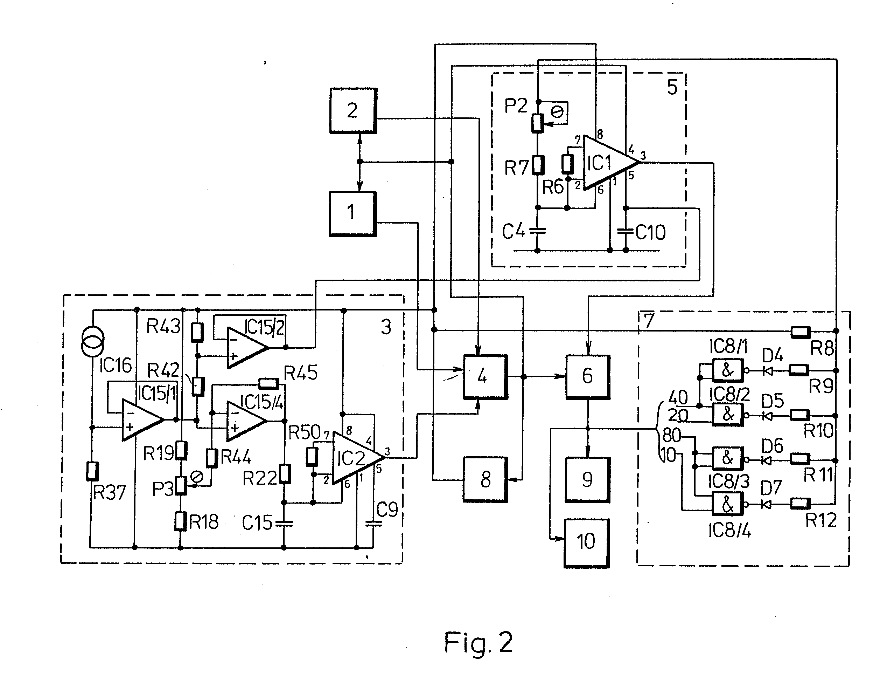

Die Kompensierung der Temperaturabhängigkeit des Feuchtefüheroszillators 1 wird ohne die vom Temperaturfühleroszillator 3 zum Meßsignaloszillator 5 geleitete kompensierende Spannung derart durchgeführt, daß die bei höheren Temperaturwerten angestiegene Empfindlichkeit den Meßsignaloszillator 5 proportional an kleinere Frequenzen umstimmt. Einzelheiten dieser Maßnahme werden anhand der Erläuterung der Fig. 2 noch näher beschrieben.

Für die Speisespannungsversorgung ist im Beispiel eine Batterie vorgesehen. Schrittweise, d.h. nur für die Zeitdauer der Messung einschaltende Spannung erhalten der Feuchtefühleroszillator 1, der Referenzoszillator 2, der Meßsignaloszillator 5 und der Temperaturfühleroszillator 3, wobei eine konstante Speisespannung dem Signalumformer und Umschalter 4, dem Zähler 6, dem Meßsignalfrequenzregler 7 der Anzeige 9 und dem Ferngeber 10 geliefert wird. Die Messung wiederholt sich automatisch nach der Nullstellung des Signalumformers und Umschalters 4 und des Zählers 6. Die Nullstellung kann automatisch oder durch von außen eingegebenen Impuls durchgeführt werden.

Falls das Meßgerät durch einen Druckknopf auf "Temperatur-Betriebsart" geschaltet wird, wird der Feuchtefühleroszillator 1 abgetrennt und der Temperaturfühleroszillator 3 eingeschaltet. Gleichzeitig schaltet der Signalumformer und Umschalter 4 den Meßsignalfrequenzregler 7 ab. Die Frequenz des Meßsignaloszillators 5 ist also in der Temperaturmessungsbetriebsart von dem Meßsignalfrequenzregler 7 unabhängig. Der Temperaturfühler stimmt den Temperaturfühleroszillator 3 auf eine von der aktuellen Temperatur abhängige Frequenz ab und die Abweichung von der Frequenz des Referenzoszillators 2 bestimmt die Wirkungszeit des Meßsignaloszillators 5. Im Falle von negativen Temperaturen ändert sich die Reihenfolge der Pegeländerungen, die an den Ausgängen der zwei Frequenzteiler des Signalumformers und Umschalters 4 erscheinen und die durch die Vorzeichenstromkreise des Zählers 6 abgetastet werden, wodurch der negative Vorzeicheneingang der Anzeige 9 gesteuert wird.

Der Aufbau der einzelnen Schaltungsblöcke der in Fig. 1 gezeigten Blockschaltung wird durch Fig. 2 näher erläutert.

Der Meßsignaloszillator 5 ist ein aus einem Stromkreis Type CA 555 (5C1) realisierter RC-Oszillator, dessen Frequenz durch an die verschiedenen Eingänge gegebene Spannungen verändert wird. $C_4$-$R_7$-$R_6$ sind die frequenzbestimmten Elemente des Oszillators. $P_2$ $R_7$ dienen zur Einstellung der gewünschten Werte. $C_{10}$ ist die Pufferkapaziät des inneren Spannungsteilers des integrierten Stromkreises. Die Frequenz des Meßsignaloszillators 5 beeinflussen im Falle der Anwendung der obigen frequenzbestimmenden Elemente noch die auf $P_2$ gegebene Spannung und die von außen auf den inneren Spannungsteiler des IC1 gegebene Spannung (Eingang 5). Die Frequenz ist der auf $P_2$ gegebenen Spannung direkt und der auf den Eingang 5 gegebenen Spannung umgekehrt proportional.

Die auf $P_2$ gegebenen Spannung liefert der Meßsignalfrequenzregler 7. Das ist diejenige Einheit, die die Nichtlinearität des Feuchtefühlers zu kompensieren die Aufgabe hat, die im wesentlichen ein Spannungsteiler ist, dessen oberstes Glied $R_8$ und dessen niedrigsten Glieder die Resultierende der parallel geschalteten Widerstände $R_9$, $R_{10}$, $R_{11}$ und $R_{12}$ bilden. Bis zu einer Sättigung von 40% des Zählers 6 sind sämtliche Tore des IC8-Stromkreises des Meßsignalfrequenzreglers 7 geschlossen, wobei ihre Ausgänge auf hohem Pegel sind, wodurch sie die auf $P_2$ gelangende Spannung nicht beeinflussen. Zwischen 40 und 60 % schaltet der Eingang von IC 8/1 auf hohen Pegel, sein Ausgang auf einen niedrigen Pegel, so daß dieser mit $R_8$ einen Spannungsteiler $R_9$ bildet, der die Frequenz des Meßsignaloszillators 5 abnimmt. Zwischen 60 und 80 % gelangt der zweite Eingang von IC 8/2 auf einen hohen Pegel, wodurch $R_{10}$ mit $R_9$ parallel geschaltet wird. Bei 80% gelangen die ersten und zweiten Eingänge von IC 8 auf niedrigen Pegel, der Eingang drei von IC 8 auf hohen Pegel, so daß statt des niedrigen Glieds $R_9$, $R_{10}$-$R_{11}$ das niedrigste Glied des Spannungsteilers wird. Oberhalb von 90% gelangt der zweite Eingang von IC 8/4 auch auf hohen Pegel, wodurch $R_{12}$ mit $R_{11}$ in parallele Schaltung kommt.

Dioden $D_4$ ... $D_7$ sind Trenndioden. Die Linearisierung kann natürlich durch wählbare Annäherungspunkte realisiert werden.

Der Temperaturfühleroszillator 3 versieht zwei Funktionen. Bei Messung der relativen Feuchte liefert der Temperaturfühler $R_{37}$ des Typs AD 590 (IC 16) mit seinem Arbeitswiderstand über den Spannungsfolger $R_{42}$-$R_{43}$ (IC 15/1) und den Spannungsfolger IC 15/2 so eine temperaturabhängige Spannung dem Meßsignaloszillator 5, zu der zwecks Kompensierung der Temperaturabhängigkeit des Feuchtigkeitsfühlers die Frequenz des Meßsignaloszillators abnimmt.

Bei der Messung der Temperatur wird die Spannung desselben Temperaturfühlers - verstärkt in der Proportion von $R_{45}/R_{44}$ des Operationsverstärkers IC 15/4 - auf den Abstimmeingang von IC 2 gegeben. Die Frequenz des Oszillators IC 2 wird in Funktion der auf $R_{22}$ gelangenden Spannung durch $R_{22}$, $R_{50}$ und $C_{15}$ bestimmt. $C_9$ ist der Pufferkondensator des inneren Spannungsteilers des zeitbestimmenden Stromkreises der Typen CA 555. Der Grundpunkt, d.h. 0 °C entsprechende Punkt des Wirkungsbereiches des Temperaturoszillators, der mit IC2 gestaltet ist, kann durch die Schaltungselemente $R_{19}$, $P_3$, $R_{18}$ eingestellt werden.

Der Feuchtefühleroszillator 1, der Referenzoszillator 2 und der Temperaturfühleroszillator 3 mit IC 2 sind oder können gleicherweise gestaltet sein und z.B. mit Stromkreisen der Type CA 555 realisiert werden. Der Signalumformer und Umschalter 4 enthält zwei integrierte Frequenzteiler (z.B. CD 4040) und weiter elektronische und mechanische Schalter. Der Zähler 6 kann z.B. durch Stromkreise der Type CD 4518 realisiert werden.

Die Speisespannungsquelle 8 enthält einen mit einem Druckknopf betätigbaren batterieschaltenden Stromkreis und weiter einen Stromkreis, der das nullierende Zeichen periodisch herstellt. Die Speisespannungsquelle 8 enthält weiter einen Stromkreis, der auf die Einwirkung des Nullierungssignals einschaltet, am Ende der Messung ausschaltet, schrittweise funktioniert und stabilisiert ist. Die Speisespannungsquelle 8 enthält weiter einen Stromkreis, der nach der Ausschaltung des Batterieschalters noch einige Sekunden lang die Anzeige der Speisespannung sichert. Die erwähnten Stromkreise sind aus konventionellen Elementen hergestellt.

Die Anzeige 9 ist ein LCD-Element, mit konventionellen Betriebsstromkreisen ausgerüstet.

Der Ferngeber 10 enthält einen D/A-Umsetzer, einen Anpassungsverstärker, der z.B. zum Betrieb eines registrierenden Gerätes geeignet ist. Ein großer Vorteil der Erfindung liegt darin, daß das Gerät mit einem Fühler versehen ist, der überhaupt keine Behandlung (Benässung und Lüftung), keine Wartung beansprucht und, vorausgesetzt eine agressive Umgebung, unempfindlich ist.

Der Fühler - falls nötig - kann leicht durch einen anderen Fühler von derselben Type ersetzt werden, wobei eine neue Eichung am selben Ort durchgeführt werden kann.

Die Leistung bzw. Stromaufnahme des Meßgerätes ist gering, die Abmessungen sind gering, Batteriebetrieb ist vorgesehen, und das Meßgerät ist transportabel. Ein weiterer Vorteil ist, daß die Anzeige numerisch ist. Als Fernmeldeanlage funktionierend kann das Ausgangssignal unmittelbar in ein Datenverarbeitungssystem eingegeben werden.

Ein weiterer Vorteil liegt darin, daß die Meßgenauigkeit von der Temperatur des zu messenden Mediums überhaupt nicht abhängt.

Es ist von besonderem Vorteil, daß das Ausgangssignal der relativen Feuchte linear proportional ist, d.h. innerhalb des Meßbereiches überall bei einer relativen Feuchtigkeitsänderung von 1% die Anzeige immer mit einer Zahl 1 verändert wird.

Es ist noch von großem Vorteil, daß das Meßgerät sehr einfach und leicht von der Feuchtemessung auf Temperaturmessung umschaltbar ist.

Patentansprüche:

1. Elektronischer Messer und/oder Ferngeber für relative Feuchte mit einem kapazitiven oder ohmischen Fühler, der einen kapazitiv oder ohmisch abstimmbaren Oszillator (1), einen Referenzoszillator (2), einen Signalumformer (4), einen Zähler (6) und gegebenenfalls eine Anzeige (9) besitzt, dadurch g e k e n n z e i c h n e t , daß das frequenzbestimmte Element des Feuchtefühleroszillators (1) ein Feuchtfühler für relative Feuchte ist, daß der Ausgang des Feuchtefühleroszillators (1) vorzugsweise über den Signalumformer (4) an den Eingang des Zählers (6) angeschlossen ist; daß der Referenzoszillator (2) vorzugsweise über den Signalumformer (4) an einen Meßsignaloszillator (5) angeschlossen ist, der seinerseits an den anderen Eingang des Zählers (6) angeschlossen ist, und daß der Ausgang des Zählers (6) an einen mit einem Temperaturfühler versehenen Meßsignalfrequenzregler (7) angeschlossen ist, der über seinen Reglerausgang auf den Meßsignaloszillator (5) geschaltet ist.

2. Elektronischer Feuchtemesser und/oder Ferngeber nach Anspruch 1, dadurch g e k e n n z e i c h n e t , daß der Meßsignalfrequenzregler (7) über einen temperaturabhängigen Spannungsregler und über einen in Abhängigkeit des Meßwertes wirkenden Spannungsregler verfügt.

3. Elektronischer Feuchtemesser und/oder Ferngeber nach Anspruch 1 oder 2, dadurch g e k e n n z e i c h n e t , daß zum Oszillator ein statt des relativen Feuchtemessers von außen umschaltbarer Temperaturfühler anschließbar angeordnet ist.

Fig.1

Fig. 2

0122945

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | ELEKTRONIK, Band 31, Nr. 16, August 1982, München G. KRAMP "Digitale Luftfeuchte-Messschaltungen", Seiten 30-34 * Ganzes Dokument * | 1 | G 01 N 27/22 G 01 N 27/04 |
| | --- | | |
| A | US-A-4 080 563 (DICKEY-JOHN CORP.) * Spalten 4-6; Figur 10 * | 1 | |
| | --- | | |
| A | US-A-4 287 470 (MEM MÜSZAKI INTEZET) * Spalten 3, 4; Figur 1 * | 1 | |
| | --- | | |
| A | DE-A-2 920 734 (ENDRESS UND HAUSER) * Figur 4; Seiten 19-23 * | 1 | RECHERCHIERTE SACHGEBIETE (Int. Cl. ³) |
| | --- | | |
| A | EP-A-0 019 154 (BASF) * Figuren 1, 2; Seite 4, Zeile 33 - Seite 6, Zeile 24 * | 1 | G 01 N 25/56 G 01 N 25/62 G 01 N 25/64 |
| | --- | | G 01 N 27/04 |
| T | JOURNAL OF PHYSICS. E. SCIENTIFIC INSTRUMENTS, Band 16, August 1983, GB B.K. WARD "Digital hygrometer with capacitive sensor", Seiten 731-733 * Ganzes Dokument * | 1 | G 01 N 27/22 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 23-11-1983 | DEVEZA R.R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82